# EUROPEAN PATENT SPECIFICATION

(11) **EP 4 394 669 B1**
(45) Date of publication and mention of the grant of the patent: **04.11.2026**
(21) Application number: 22891533.6
(22) Date of filing: 01.08.2022
(51) Int. Cl.: G06Q 10/04, G06Q 10/08, G06Q 10/047, G06Q 10/0835, G06Q 10/083

(54) **LOGISTICS ROUTING NETWORK DETERMINATION METHOD AND APPARATUS, AND ELECTRONIC DEVICE**
VERFAHREN UND VORRICHTUNG ZUR BESTIMMUNG EINES LOGISTIKROUTINGNETZWERKS UND ELEKTRONISCHE VORRICHTUNG
PROCÉDÉ ET APPAREIL DE DÉTERMINATION DE RÉSEAU DE ROUTAGE LOGISTIQUE, ET DISPOSITIF ÉLECTRONIQUE

(30) Priority: 11.11.2021 CN 202111353994; 07.12.2021 CN 202111480399
(43) Date of publication of application: 03.07.2024
(73) Proprietor: Beijing Jingdong Zhenshi Information Technology Co., Ltd., Beijing, Beijing 100086 (CN)
(72) Inventor: JIANG, Jing, Beijing 100086 (CN); SU, Xiaolong, Beijing 100086 (CN); YAN, Liang, Beijing 100086 (CN); ZHUANG, Xiaotian, Beijing 100086 (CN); WU, Shengnan, Beijing 100086 (CN)
(74) Representative: Vossius & Partner Patentanwälte Rechtsanwälte mbB
(86) International application number: PCT/CN2022/109549
(87) International publication number: WO 2023/082724

(56) References cited:
- WO-A1-2023/082782
- CN-A- 110 555 640
- CN-A- 110 826 951
- CN-A- 112 163 820
- CN-A- 113 077 103
- CN-A- 113 255 950
- CN-A- 113 408 775
- CN-A- 113 516 424
- CN-A- 113 887 844
- US-A1- 2020 232 802

## Description

### TECHNICAL FIELD

The present disclosure relates to the field of logistics technology, and in particular, to a method for determining a logistics routing network, an apparatus for determining a logistics routing network, a non-transitory computer-readable medium, and an electronic device.

### BACKGROUND

With the rapid development of logistics industry, a routing network composed of various sorting centers and connecting lines of them is formed. With increasing of logistics sorting businesses, the quantity and scale of the nodes such as the sorting centers, the stations, or the like in the routing network and the quantity and scale of the edges formed by the lines, as well as the complexity of the network connection are continuously increased. How to optimize the routing network so as to ensure the service timeliness and reduce the transportation cost becomes an urgent problem to be solved in the art.

In current optimization of a routing network, it mostly adopts artificial experience or rule screening. That is, a routing network is formulated through artificial experience or screened according to a fixed rule condition based on the existing transportation capacity condition.

In the above optimization process, the artificial experience has great subjectivity, thus the optimization effect cannot be ensured. Moreover, rule screening can only realize local optimization, thus the whole network optimization effect of different businesses cannot be ensured. In addition, the current optimization technology may have a great impact on the entire routing network, thus affecting the normal operation of the routing network.

It should be noted that the information disclosed in the above background part is only used to enhance the understanding of the background of the present disclosure, and therefore may include information that does not constitute related art known to those of ordinary skill in the art.

### SUMMARY

According to a first aspect of the present disclosure, there is provided a method for determining a logistics routing network, including: obtaining line data of a line to be optimized, stowage data of stowage to be optimized, and associated routing of the stowage to be optimized; determining an associated line set corresponding to the stowage to be optimized according to the associated routing of the stowage to be optimized; generating a line sub-network to be optimized according to the associated line set; obtaining a routing sub-network to be optimized by adding corresponding line data and stowage data to the line sub-network to be optimized based on the line data of the line to be optimized and the stowage data of the stowage to be optimized; and screening out target routing in the routing sub-network to be optimized according to a transportation cost, and further determining a target logistics routing network.

In some embodiments of the present disclosure, based on the above scheme, before obtaining the line data of the line to be optimized, the stowage data of the stowage to be optimized, and the associated routing of the stowage to be optimized, the method further includes: determining the line to be optimized; and determining the stowage to be optimized according to the line to be optimized and a matching relationship between a line and stowage. In some embodiments of the present disclosure, based on the above scheme, obtaining the line data of the line to be optimized, the stowage data of the stowage to be optimized, and the associated routing of the stowage to be optimized includes: obtaining mileage information, transportation capacity manner information, cargo volume information, remaining stowage capacity information and transportation cost information of the line to be optimized; obtaining stowage volume information and stowage schedule information of different sorting centers corresponding to the stowage to be optimized; obtaining alternative routing of the stowage to be optimized according to original routing of the stowage to be optimized; and obtaining the associated routing according to the original routing and the alternative routing

In some embodiments of the present disclosure, based on the above scheme, obtaining the alternative routing of the stowage to be optimized according to the original routing of the stowage to be optimized includes: obtaining the alternative routing of the stowage to be optimized by screening according to the original routing of the stowage to be optimized, thus service timeliness that stowage of the alternative routing arrives at a station is not lower than corresponding service timeliness of the original routing.

In some embodiments of the present disclosure, based on the above scheme, determining the associated line set corresponding to the stowage to be optimized according to the associated routing of the stowage to be optimized includes: determining a corresponding original line set according to the original routing of the stowage to be optimized; determining a corresponding alternative line set according to the alternative routing of the stowage to be optimized; and determining the associated line set according to the original line set and the alternative line set.

In some embodiments of the present disclosure, based on the above scheme, screening out the target routing in the routing sub-network to be optimized according to the transportation cost includes: calculating a transportation cost of any routing in the routing sub-network to be optimized; and selecting routing corresponding to a minimum transportation cost as the target routing.

In some embodiments of the present disclosure, based on the above scheme, calculating the transportation cost of any routing in the routing sub-network to be optimized includes: determining a transportation cost type of any routing in the routing sub-networks to be optimized; and obtaining the transportation cost of the routing by summing transportation costs corresponding to all transportation cost types according to the transportation cost type; where the transportation cost type includes a less-truck-load cost of a less-truck-load line on the original routing in the routing, a full-truck-load cost of a full-truck-load line on the original routing in the routing and an increased less-truck-load cost of an alternative line after stowage adjustment in the routing.

According to a second aspect of the present disclosure, there is provided an apparatus for determining a logistics routing network, including a data obtaining module, an associated line determination module, a line sub-network generation module, a routing sub-network construction module, and a routing network determination module. The data obtaining module is configured to obtain line data of a line to be optimized, stowage data of stowage to be optimized, and associated routing of the stowage to be optimized. The associated line determination module is configured to determine an associated line set corresponding to the stowage to be optimized according to the associated routing of the stowage to be optimized. The line sub-network generation module is configured to generate a line sub-network to be optimized according to the associated line set. The routing sub-network construction module is configured to obtain a routing sub-network to be optimized by adding corresponding line data and stowage data to the line sub-network to be optimized based on the line data of the line to be optimized and the stowage data of the stowage to be optimized. The routing network determination module is configured to screen out target routing in the routing sub-network to be optimized according to a transportation cost, and further determine a target logistics routing network.

According to a third aspect of the present disclosure, there is provided a computer-readable storage medium with a computer program stored thereon; when the computer program is executed by a processor, the method for determining a logistics routing network according to any one of the above is implemented.

According to a fourth aspect of the present disclosure, there is provided an electronic device, including: a processor; and a memory, configured to store an executable instruction of the processor; where, the processor is configured to perform the method for determining a logistics routing network according to any one of the above via executing the executable instruction.

It should be understood that the above general description and the following detailed description are merely exemplary and explanatory, which cannot limit the present disclosure.

### BRIEF DESCRIPTION OF THE DRAWINGS

The accompanying drawings here, which are incorporated in and constitute a part of the description, illustrate embodiments consistent with the present disclosure and together with the description serve to explain the principles of the present disclosure. Obviously, the drawings in the following description are merely some embodiments of the present disclosure, and for those of ordinary skill in the art, other drawings can also be obtained from these drawings without creative efforts.
FIG. 1 illustrates a schematic diagram of an exemplary system architecture in which a method and apparatus for determining a logistics routing network according to some embodiments of the present disclosure can be applied.
FIG. 2 schematically illustrates a flowchart of a method for determining a logistics routing network according to some embodiments of the present disclosure.
FIG. 3 schematically illustrates a flowchart of obtaining line data, stowage data, and associated routing according to some embodiments of the present disclosure.
FIG. 4 schematically shows a schematic diagram of an original delivery path and an alternative line of the stowage according to one embodiment of the present disclosure.
FIG. 5 schematically illustrates a schematic diagram of a cargo volume of stowage on the original delivery path and the remaining stowage capacity in an alternative line according to some embodiments of the present disclosure.
FIG. 6 schematically illustrates a flowchart of a process of determining an associated line set according to some embodiments of the present disclosure.
FIG. 7 schematically illustrates a flowchart of a process of determining a target routing according to some embodiments of the present disclosure.
FIG. 8 schematically illustrates a structural block diagram of an apparatus for determining a logistics routing network according to some embodiments of the present disclosure.
FIG. 9 illustrates a schematic structural diagram of a computer system suitable for implementing an electronic device according to some embodiments of the present disclosure.

### DETAILED DESCRIPTION

Example embodiments will now be described more fully with reference to the accompanying drawings. Example embodiments, however, can be implemented in various forms and should not be construed as limited to the embodiments set forth herein; by contrast, these embodiments are provided so that the present disclosure will be thorough and complete, and will fully convey the concept of example embodiments to those skilled in the art. The described features, structures, or characteristics may be combined in any suitable manner in one or more embodiments. In the following description, numerous specific details are provided to give a thorough understanding of embodiments of the present disclosure. However, those skilled in the art will appreciate that the technical solutions of the present disclosure may be practiced without one or more of the specific details, or other methods, components, apparatuses, steps, or the like, may be employed. In other instances, common-known technical solutions are not shown or described in detail to avoid blurring various aspects of the present disclosure due to a reversal of the order of host and guest.

In addition, the drawings are merely schematic illustrations of the present disclosure, and are not necessarily drawn to scale. Same reference numerals in the drawings denote the same or similar parts, and thus repeated descriptions of them will be omitted. Some block diagrams shown in the drawings are functional entities, and do not necessarily correspond to physically or logically independent entities. These functional entities may be implemented in the form of software, or these functional entities may be implemented in one or more hardware modules or integrated circuits, or these functional entities may be implemented in different networks and/or processor apparatuses and/or microcontroller apparatuses.

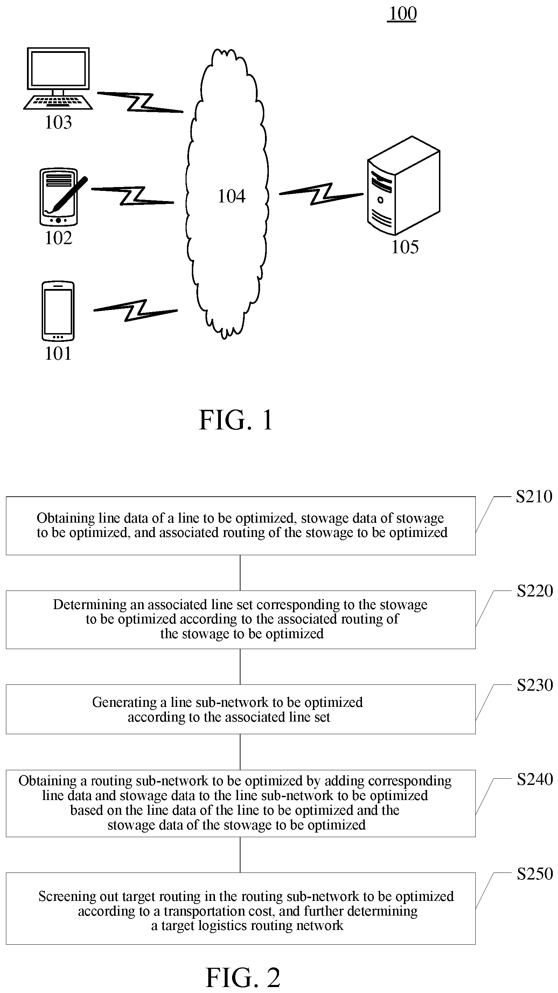

FIG. 1 illustrates a schematic diagram of a system architecture 100 of an exemplary application environment in which the method and apparatus for determining a logistics routing network according to embodiments of the present disclosure can be applied. As shown in FIG. 1, the system architecture 100 may include one or more of the terminal devices 101, 102 and 103, the network 104 and the server 105. The network 104 is configured to provide a medium of a communication link between the terminal devices 101, 102 and 103 and the server 105. The network 104 may include various connection types, such as wired communication links, wireless communication links, fiber optic cables, or the like. The terminal devices 101, 102 and 103 may be various electronic devices having display screens, including but not limited to desktop computers, portable computers, smartphones, tablet computers, or the like. It should be understood that the numbers of terminal devices, networks, and servers in FIG. 1 are merely illustrative. According to implementation requirements, there may be any number of terminal devices, networks, and servers. For example, the server 105 may be a server cluster composed of a plurality of servers.

The method for determining a logistics routing network provided according to the embodiments of the present disclosure may be performed by the server 105; and, correspondingly, the apparatus for determining a logistics routing network is generally disposed in the server 105. The method for determining a logistics routing network provided according to the embodiments of the present disclosure may also be performed by the terminal device 101, 102 or 103; and, correspondingly, the apparatus for determining a logistics routing network may also be disposed in the terminal device 101, 102 or 103.

The optimization and determination of the logistics routing network relates to many problems such as service timeliness, transportation cost and influence of optimization on the operation and cost of the whole network, which is a multi-factor linkage problem. According to the present disclosure, customized network adjustment is performed for business requirements, and transportation costs are reduced on the premise of not affecting service timeliness. Mainly based on that the optimization solution of each module in the routing network relates to different departments in the process of business development, in order to expedite the implementation of the solution, the various modules are decoupled in the present disclosure decouples, the solution for the single module and single scene is output respectively, thus satisfying the single-business scene as much as possible under the target guidance of the whole logistics routing network optimization.

The technical solutions of the embodiments of the present disclosure are described in detail below.

Referring to FIG. 2, a method for determining a logistics routing network according to an example implementation provided in the present disclosure may include the following steps.

In step S210, line data of a line to be optimized, stowage data of stowage to be optimized, and associated routing of the stowage to be optimized are obtained.

In step S220, an associated line set corresponding to the stowage to be optimized is determined according to the associated routing of the stowage to be optimized.

In step S230, a line sub-network to be optimized is generated according to the associated line set.

In step S240, based on the line data of the line to be optimized and the stowage data of the stowage to be optimized, a routing sub-network to be optimized is obtained by adding corresponding line data and stowage data to the line sub-network to be optimized.

In step S250, target routing in the routing sub-network to be optimized is screened out according to a transportation cost, and then a target logistics routing network is determined.

In the method for determining a logistics routing network provided by the present embodiment of the present example, the line data of the line to be optimized and the stowage data of the stowage to be optimized as well as the associated routing of the stowage to be optimized can be obtained according to the business requirements, and then the associated line set corresponding to the stowage to be optimized can be determined. The line corresponding to the business is extracted from the whole logistics network, and then the routing sub-network to be optimized for the current business is constructed based on this, so that on one hand, the impact of optimization adjustment on the whole logistics network is reduced, and on the other hand, the service timeliness can be ensured through simple condition setting. In addition, according to the transportation cost, the target routing in the routing sub-network to be optimized is screened out, and then the target logistics routing network is determined, thus ensuring the minimization of the transportation cost of the target logistics routing network, and further ensuring the final whole network optimization effect. Therefore, the problem in the related art that the whole network optimization effect for different business requirements cannot be ensured and it have a great impact on the entire routing network, is solved.

In another embodiment below, the above steps are described in more detail.

In step S210, the line data of the line to be optimized, the stowage data of the stowage to be optimized and the associated routing of the stowage to be optimized are obtained.

In the present example embodiment, the line to be optimized may be determined according to the business requirement. The business requirement includes information such as the starting point information and the ending point information of the cargo to be transported, the total transportation cost requirement, the timeliness requirement, or the like. It may also include some special requirements; for example, the business party wishes to perform stowage optimization on the final cargo. For the information such as the starting point information and the end point information of the cargo to be transported, the total transportation cost requirement, the timeliness requirement, or the like, in the above business requirement, the routing satisfying the requirement may be matched out through the logistics network database, and then the line to be optimized may be determined.

In the present example embodiment, the routing may be a path from the place of departure to the destination, and may also include the departure time, the arrival time, and the transportation capacity manner from one node to another node in the path. That is, the routing may be the path from the place of departure to the destination, and the departure time, the arrival time, and the transportation capacity condition of the vehicles between all nodes in the path. The node in the path may be a sorting point, a station, a transit station, etc., which is not specifically limited in the example.

In the present example embodiment, the line may be a segment of the line in the transportation path formed from the place of departure to the destination. For example, the path from a certain sorting center at the location A1 to a certain sorting center at the location A2 is: from a certain sorting center at the location A1 to a certain sorting center at the location A3 where transition is performed, and from the transition station to the sorting center corresponding to the location A2. The line from a certain sorting center at the location A1 to a certain sorting center at the location A3 may be a high-speed line, or may be a national-highway line, or may be a partial high-speed line plus a partial national-highway line. Therefore, in the case that the path is determined, there will be a plurality of matched lines.

Furthermore, the stowage to be optimized may be determined according to the line to be optimized and the matching relationship between the line and the stowage. For a logistics network, the stowage on the line is determined; that is, for the whole logistics network, there is corresponding stowage matched for each line in its database, and the line and the stowage correspond to each other.

After the line to be optimized and the stowage to be optimized are determined, the line data and the stowage data of the line to be optimized can be directly read from the database of the logistics network, or may be generated online by using an existing logistics network generation system. The associated routing may be determined by using a tandem engine in the logistics field. The tandem engine may be a tandem relationship table established according to each sorting center, and the relationship table may include information such as the path formed by each sorting center and the stowage on the path, the stowage code, the schedule, etc. Under the condition that there are less lines to be optimized, the associated routing may also be manually selected and set.

In the present example embodiment, the line data of the line to be optimized, the stowage data of the stowage to be optimized and the associated routing of the stowage to be optimized may be obtained through steps S310 to S340.

In step S310, mileage information, transportation capacity manner information, cargo volume information, remaining stowage capacity information and transportation cost information of the line to be optimized are obtained.

In the present example embodiment, the mileage information of the line to be optimized may include the line code and the line mileage. In the logistics network, each line is provided with a corresponding line code and line mileage, and such data may be directly read from the system after the line is determined. The transportation capacity manner information may include information such as the transportation capacity manner, the number of vehicles on the line, the stowage on the line, or the like, and the transportation capacity manner may include the transportation type and the transportation tool type; for example, the transportation capacity manner is land transportation with a large transportation vehicle of 9.6m. The cargo volume may be the sum of the accumulated cargo volumes. The remaining stowage capacity information may be a difference between the volume of the corresponding stowage on the line to be optimized and the current cargo volume. The transportation cost information may include the transportation cost for less-truck-load average volume of the line and the full-truck-load transportation costs of different types of vehicles types; the transportation cost for less-truck-load average volume may be the transportation cost for per volume of the less-truck-load cargo. The type of the line, such as a trunk line and a branch line, may also be obtained. The transportation type, such as full-truck-load transportation on highway, less-truck-load transportation on highway, or the like, may also be obtained. The above line data may be obtained by a database. The data obtained here is used in the subsequent processing of determining the routing network.

In step S320, the stowage volume information and the stowage schedule information of different sorting centers corresponding to the stowage to be optimized are obtained.

In the present example embodiment, the stowage volume information may be the volume data of the stowage. The stowage schedule information may include the first line code of the stowage and the schedule the stowage. The schedule the stowage is the departure time and the arrival time of the stowage. The stowage volume information of different sorting centers may be the cargo volumes on the line flow direction corresponding to the stowage. For example, when the stowage is present on a plurality of line flow directions, the stowage data includes the volume of the stowage on each line flow direction. The above line data may all be obtained through a database.

In step S330, an alternative routing of the stowage to be optimized is obtained according to an original routing of the stowage to be optimized.

In the present example embodiment, the original routing is a stowage routing before optimization, can be obtained from a logistics network database, and can also be obtained from a routing tandem engine. The original routing includes an original delivery path of the stowage to be optimized and data such as a line coding sequence and a schedule included in the original delivery path. Compared with a path, the routing carries more information, such as the line coding sequence and the stowage schedule. The logistics network is a transportation network formed by a large number of routing connected in series. The alternative routing is obtained by screening by means of a routing tandem engine or a greedy algorithm, so that the service timeliness for the stowage of the alternative routing to arrive at the station is not lower than the corresponding service timeliness of the original routing. Similar to the original routing, the alternative routing also includes an alternative path and information such as a line coding sequence and a schedule included in the alternative path.

For example, a greedy algorithm is used to screen the alternative routing. The objective function may be set as the lowest transportation cost from the start point to the end point, or may be set as the minimum transition from the start point to the end point, or may be set as the minimum number of transportation vehicles from the start point to the end point, which can be set according to needs and is not limited in the present embodiment. The constraint condition may be that the service timeliness for the stowage of the alternative routing to arrive at the station is not lower than the corresponding service timeliness of the original routing. A plurality of constraint conditions may also be set; for example, the cost is not increased, the time is not increased, etc. And then, the greedy strategy is set. One or more alternative routings may be screened, and the number of alternative routings is not limited in the present embodiment.

In step S340, an associated routing is obtained according to the original routing and the alternative routing.

In the present example embodiment, the original routing and the alternative routing may be used together as an associated routing. It is also possible that the original routing and a part of alternative routing are used together as the associated routing, which is not limited in the present example embodiment. The part of alternative routing may be obtained by screening according to a screening rule.

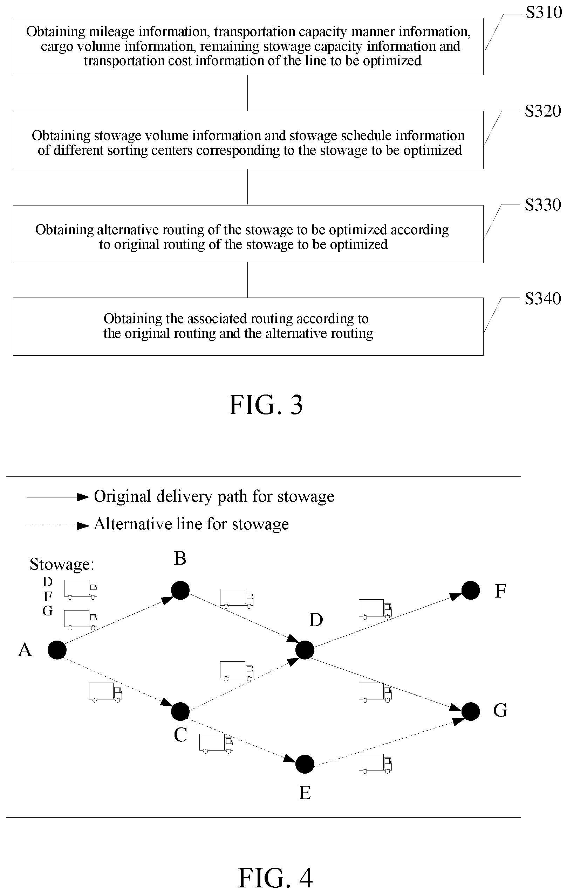

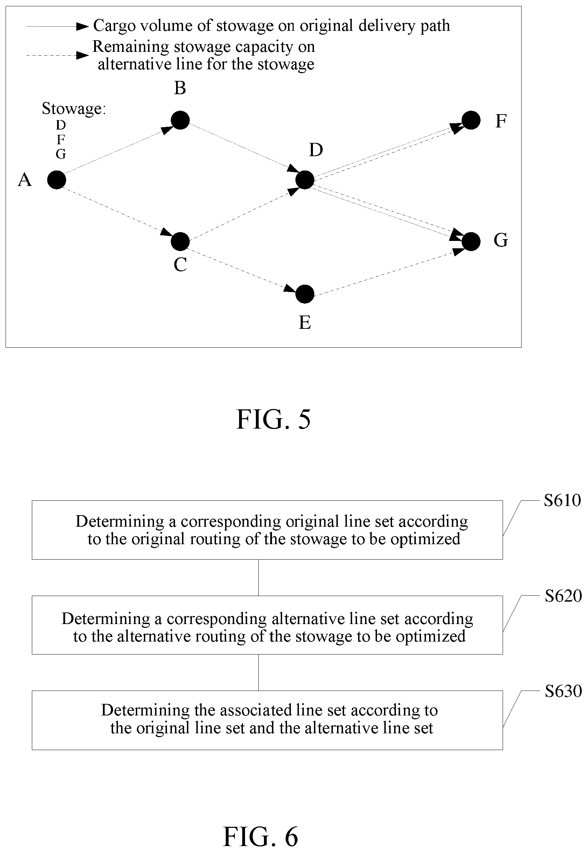

For example, as shown in FIG. 4, for a logistics network composed of sorting centers A, B, C, D, E, F, and G, the original delivery paths for the stowage corresponding to D, F and G are A-B-D, A-B-D-F, and A-B-D-G, respectively. The alternative lines for the stowage corresponding to D, F and G are A-C-D, A-C-D-F, and A-C-E-G, respectively. It can be seen that there may be line overlaps between the original routings and the alternative routings, and there may also be line overlaps between alternative routings. Therefore, the change of cargo volume on the alternative line after optimization is comprehensively considered in the present disclosure. Meanwhile, after optimization (after stowage adjustment), the cargo volumes on lines of the original routing may be reduced, and the cargo volumes on lines of the alternative routing may be increased, thus the impact of stowage adjustment on the lines of the original routing and the alternative routing is comprehensively considered. As shown in FIG. 5, the cargo volume of stowage on the original delivery path includes the cargo volumes of stowage on lines A-B, B-D, D-F, and D-G, and the remaining stowage capacity on the alternative lines includes the remaining stowage capacity on lines such as lines A-C, C-D, D-F, D-G, C-E, and E-G.

In step S220, an associated line set corresponding to the stowage to be optimized is determined according to the associated routing of the stowage to be optimized.

In the present example embodiment, referring to FIG. 6, the associated line set corresponding to the stowage to be optimized may be determined through steps S610 to S630.

In step S610, a corresponding original line set is determined according to the original routing to be optimized. All lines included in the original routing may be used as the original line set. The lines in the original routing may also be screened, and lines included in one or more routing may be selected as the original line set, which is not specifically limited in the present example embodiment.

In step S620, a corresponding alternative line set is determined according to the alternative routing of the stowage to be optimized. All lines included in the alternative routing may be used as the alternative line set. The lines in the alternative routing may also be screened, and lines included in one or more alternative routing may be selected as the alternative line set, which is not specifically limited in the present example embodiment.

In step S630, the associated line set is determined according to the original line set and the alternative line set. The original line set and the alternative line set may be used together as the associated routing; the original line set and a part of the alternative line set may also be used together as the associated routing; and, a part of the original line set and all or a part of the alternative line set may also be used together as the associated routing, which is not limited in the present example embodiment. Among them, the part of the original line set or the part of the alternative line set may be obtained by screening according to different screening rules. For example, all lines in FIG. 5 constitute the associated line set.

In step S230, a line sub-network to be optimized is generated according to the associated line set.

In the present example embodiment, the line sub-network to be optimized may be directly formed by the associated line set; or, the lines in the associated line set may also be screened to form the line sub-network to be optimized, which is not limited in the present example embodiment.

In step S240, based on the line data of the line to be optimized and the stowage data of the stowage to be optimized, a routing sub-network to be optimized is obtained by adding corresponding line data and stowage data to the line sub-network to be optimized.

In the present example embodiment, since the line does not include the stowage information and other information on the line, the stowage data and line data corresponding to the line in the line sub-network to be optimized may be added to the corresponding line. The stowage data includes the volume data of each stowage for different sorting centers. If the stowage is present on a plurality of line flow directions, the stowage data indicates the volume of the stowage, the first line code of the stowage, the stowage schedule, and other information on each line flow direction. The line data my include the line code, the line mileage, the line type (such as trunk line, branch line, etc.), the transportation type (such as full-truck-load transportation on highway, less-truck-load transportation on highway, etc.), the vehicle number used on the line, the cargo volume, the remaining stowage capacity, the transportation cost for less-truck-load average volume of the line, transportation costs for full-truck-load transportation of different types, the stowage on the line, etc.

The above relationship between the routing sub-network to be optimized and the original routing network is that the routing sub-network to be optimized is constructed based on the original routing network, and the stowage adjustment only affects the cargo volumes of the lines on the routing sub-network to be optimized.

In addition, the line capability of the routing sub-network to be optimized may be analyzed. Firstly, all lines in the routing sub-network to be optimized are divided into two categories: a line set of candidate lines to be optimized (referred to as a candidate line set), and a line set included in all alternative routings (referred to as alternative line set). Since the present example is intended to reduce the cost by adjusting the stowage, the less-truck-load is reduced or the vehicle type for final cargo is lowered by reducing the final cargo volume on the candidate lines, and the remaining stowage capacity on the alternative lines can cover the stowage volume as much as possible. For the above analysis, the key point lies in the cargo volume on the candidate lines and the remaining stowage capacity of the alternative lines, based on which the capability of the lines in the sub-network is determined, as shown in FIG. 5.

In step S250, target routing in the routing sub-network to be optimized is screened out according to the transportation cost, and then a target logistics routing network is determined.

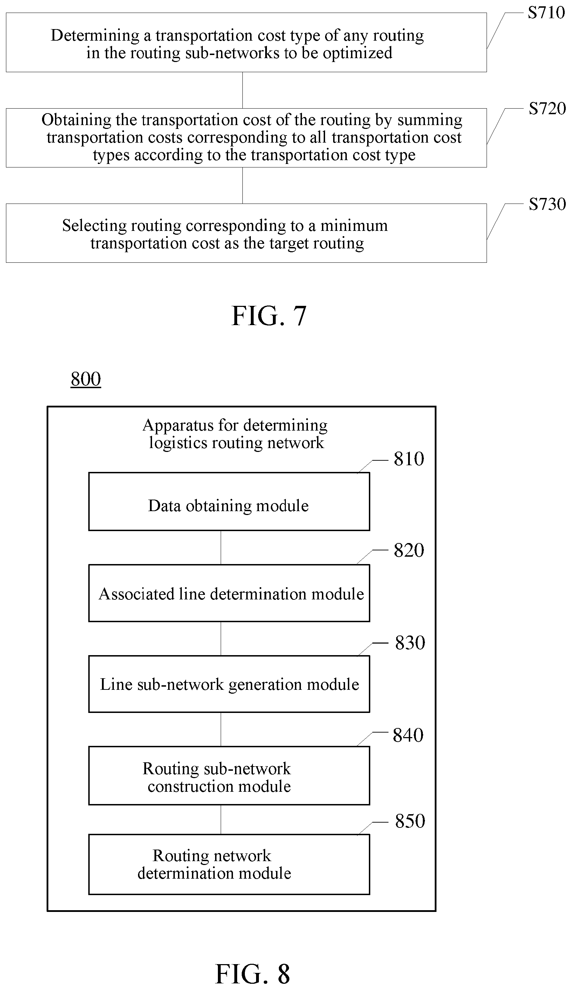

In the present example embodiment, referring to FIG. 7, network optimization is performed through steps S710 to S730.

In step S710, a transportation cost type of any routing in the routing sub-network to be optimized is determined. In the present example embodiment, the transportation cost type may include the less-truck-load cost of the less-truck-load line on the original routing in the routing, the full-truck-load cost of the full-truck-load line on the original routing in the routing, and the increased less-truck-load cost of the alternative line in the routing after stowage adjustment. The less-truck-load cost and the full-truck-load cost may be different according to different vehicle types, and may all be directly obtained through accounting or from a database.

In step S720, the transportation cost of the routing is obtained by summing transportation costs corresponding to all transportation cost types according to the transportation cost type.

In step S730, the routing corresponding to the minimum transportation cost is selected as the target routing. In the present example embodiment, if there are a plurality of parallel minimum transportation costs, a corresponding selection may be performed randomly or according to other conditions. For example, the minimum transportation cost with the minimum final cargo is selected.

In the present example embodiment, based on the routing sub-network to be optimized, the transportation cost can be reduced by constructing a mixed integer linear programming model to optimize the stowage. It is intended to make full use of the remaining stowage capacity of the alternative line, and reduce the cargo volume on the line to be optimized by adjusting the stowage.

Firstly, a mixed integer linear programming model is constructed.

The target of the model may be set to minimization of the transportation cost for the stowage. The transportation cost for the stowage is mainly composed of three parts: 1) the less-truck-load cost of the original less-truck-load line; 2) the full-truck-load cost of the original full-truck-load line; and 3) the increased less-truck-load cost of the alternative line after stowage adjustment. Optionally, the mixed integer linear programming model of the objective function is as follows: $\begin{matrix}minimize {\sum }_{\left(i, j\right) ∈ {A}_{1}} {c}_{ij} ⋅ {φ}_{ij} + {\sum }_{\left(i, j\right) ∈ {A}_{2}} {c}_{ij} ⋅ {z}_{ij} + {\sum }_{\left(i, j\right) ∈ {A}_{3}} {ϕ}_{ij} \\ s . t . {φ}_{ij} \geq {x}_{ij} - \left({w}_{ij}+{ϖ}_{ij}\right) , ∀ \left(i, j\right) ∈ {A}_{1}\end{matrix}$ (1) ${ϖ}_{ij} = {\sum }_{\left(o, k\right) ∈ {A}_{2} ∪ {A}_{3}} {\sum }_{d} {η}_{okd} \left(i, j\right) ⋅ {q}_{okd} ⋅ {y}_{od} , ∀ \left(i, j\right) ∈ {A}_{1}$ (2) ${φ}_{ij} \geq 0 , ∀ \left(i, j\right) ∈ {A}_{1}$ (3) ${\sum }_{n ∈ {N}_{od}} {λ}_{odn} = {y}_{od} , ∀ o ∈ O , d ∈ D , t ∈ {T}_{od}$ (4) ${y}_{od} = {y}_{o ′ d} , ∀ o ′ ∈ K \left(o\right) , o ∈ O , d ∈ D$ (5) ${q}_{od} = {\sum }_{k} {q}_{okd} , ∀ o ∈ O , d ∈ D$ (6) ${x}_{ij} = {\sum }_{\left(o, d\right)} {\sum }_{n ∈ {N}_{od}} {λ}_{odn} ⋅ {ϑ}_{odn} \left(i, j\right) ⋅ {q}_{od} , ∀ \left(i, j\right) ∈ {A}_{1}$ (7) ${z}_{ij} \geq {m}_{ij} - {\sum }_{d} {q}_{ijd} ⋅ {y}_{id} , ∀ \left(i, j\right) ∈ {A}_{2} ∪ {A}_{3}$ (8) ${z}_{ij} \geq 0 , ∀ \left(i, j\right) ∈ {A}_{2} ∪ {A}_{3}$ (9) ${y}_{id} ∈ \left\{0, 1\right\} , ∀ i ∈ O , d ∈ D$ (10) ${λ}_{odn} ∈ \left\{0, 1\right\} , ∀ n ∈ {N}_{od}$ (11) ${ϕ}_{ij} = \left\{\begin{matrix}0 , {z}_{ij} ∈ \left(-∞,0\right] & & \\ f \left(1, {d}_{ij}\right) , {z}_{ij} ∈ \left(0,V1\right] , {l}_{ij} = 0 & & \\ f \left(2, {d}_{ij}\right) , {z}_{ij} ∈ \left(0,V1\right] , {l}_{ij} = 1 & & \\ f \left(2, {d}_{ij}\right) , {z}_{ij} ∈ \left(V1,V2\right] & , & ∀ \left(i, j\right) ∈ {A}_{3} ; \\ f \left(3, {d}_{ij}\right) , {z}_{ij} ∈ \left(V2,V3\right] & & \\ f \left(4, {d}_{ij}\right) , {z}_{ij} ∈ \left(V3,V4\right] & & \\ f \left(5, {d}_{ij}\right) , {z}_{ij} ∈ \left(V4,V5\right] & & \end{matrix}\right.$ (12)

Parameter description is as follows. *O* represents a first sorting center set of a line to be optimized, and *o* represents a first sorting center in the set *O*. *o'* represents a first sorting center different from *o. D* represents a last sorting center set of the line to be optimized, and *d* represents a last sorting center in the set *D*. A₁ represents an alternative line set, A₂ represents a less-truck-load line set to be optimized, and A₃ represents a full-truck-load line set to be optimized. *K(o)* and *o* are node sets in the same sorting center with different schedules. *n* represents an alternative routing index, and *n* ∈ *N_{od}. N_{od}* represents an alternative routing index set corresponding to the line (*o,d*)*.* (*i,j*) represents the line code; if the schedules are different, the codes are different. *t* represents time. *T_{od}* represents the time set corresponding to the line (*o,d*)*. mᵢⱼ* represents the stowage volume to be optimized. *wᵢⱼ* represents the remaining stowage capacity of the alternative line. *q_{ijd}* represents the cargo volume of the stowage corresponding to *d* on the line *(i,j)* to be optimized. *cᵢⱼ* represents the less-truck-load cost per volume on the line (*i,j*) to be optimized. *f*(*k,dᵢⱼ*) represents the full-truck-load cost of the kth vehicle type with a distance of *dᵢⱼ. lᵢⱼ* represents the line type of the line (*i,j*); it may be set to *lᵢⱼ* ∈ {0,1}, *lᵢⱼ*=1 represents that the line is a trunk line, and *lᵢⱼ*=0 represents that the line is a branch line. *ϑ_{odn}* (*i,j*) ∈ {0,1} represents whether the nth alternative routing of the routing (*o,d*) includes the line (*i,j*), the value of which may be set to 1 when it includes, otherwise the value may be set to 0. *η_{okd}*(*i,j*) ∈ {0,1} represents whether the original routing of the stowage corresponding to *d* on the line (*o,k*) includes the line (*i,j*), the value of which may be set to 1 when it includes, otherwise the value may be set to 0. V1, V2, V3, V4, and V5 respectively represents the stowage capacity for the first, second, third, fourth, and fifth vehicle types; for example, the five vehicle types are vans of 5.2m, 7.6 m, 9.6m, 14.5m, and 17.5m, respectively. The vehicle type in the present embodiment may also be correspondingly set according to actual situations, may be more or less than 5 types, or may also be configured as vehicles of the same model or different models, which is not limited in the present example embodiment.

In the parameters of the above formulas, a part of the parameters is decision variable (i.e., a variable to be solved), which is specifically described as follows.

*zᵢⱼ* represents the remaining cargo volume on the line *(i,j)* to be optimized that is not distributed. *xᵢⱼ* ≥ 0 represents the cargo volume allocated to the alternative line (*i,j*). *y_{id}* ∈ {0,1} represents whether the stowage *d* on the sorting center *i* is distributed to the alternative line, and the value may be set to 1 when the stowage *d* on the sorting center *i* is distributed to the alternative line, otherwise, the value may be set to 0. *λ_{odn}* ∈ {0,1} represents whether the *n* ∈ *N_{od}* alternative routing is selected for the stowage *d* of the sorting center *o*, and the value may be set to 1 when it includes, otherwise, the value is set to 0. *ϕᵢⱼ* represents the full-truck-load cost of the full-truck-load line (*i,j*) to be optimized after stowage adjustment. *φᵢⱼ* represents the cargo volume requiring for less-truck-load transportation due to the fact that the remaining stowage capacity on the alternative line (*i,j*) is not enough. *ω̅ᵢⱼ* represents the remaining stowage capacity increased on the alternative line (*i,j*) due to the fact that the original stowage is allocated away. It should be noted that the direct decision variables in the model are *y_{id}* and *λ_{odn},* the former determines whether certain stowage of the sorting center is adjusted, and the latter determines the stowage is adjusted to which routing after stowage adjustment. The remaining decision variables are indirect decision variables.

Constraint description in the above model is as follows. Constraints (1) and (3) are the cargo volume requiring for less-truck-load transportation due to the fact that the remaining stowage capacity on the alternative line is not enough (which is determined according to the business requirement). Constraint (2) is the volume of the stowage to be optimized on the line (*i,j*) on the original delivery path. Constraint (4) is that at most one alternative routing is selected for each stowage (business constraint). Constraint (5) is that the stowage adjustment scheme for each schedule and each day is the same (business constraint). Constraint (6) is to count the volume to be allocated of the sorting center for different stowage. Constraint (7) is the calculation manner of the cargo volume allocated to the alternative line. Constraints (8) to (9) are that the calculation logic for the cargo volume not allocated away on the less-truck-load line ensures its non-negativity. Constraints (10) to (11) are the variable type constraints. Constraint (12) is the full-truck-load cost constraint corresponding to the vehicle type required to be used for the cargo on the full-truck-load cost line to be optimized.

Secondly, for the piecewise linear constraint of the constraint condition (12) in the above model, it is converted into a linear constraint by adding constraints. The specific conversion is as follows. For a candidate line with *lᵢⱼ*=0: ${ϕ}_{ij} = {θ}_{1} f \left(1, {d}_{ij}\right) + {θ}_{2} f \left(2, {d}_{ij}\right) + {θ}_{3} f \left(3, {d}_{ij}\right) + {θ}_{4} f \left(4, {d}_{ij}\right) + {θ}_{5} f \left(5, {d}_{ij}\right)$ ${z}_{ij} > 21 {θ}_{2} + 40 {θ}_{3} + 56 {θ}_{4} + 94 {θ}_{5}$ ${z}_{ij} \leq 21 {θ}_{1} + 40 {θ}_{2} + 56 {θ}_{3} + 94 {θ}_{4} + 123 {θ}_{5}$ ${θ}_{1} , {θ}_{2} , {θ}_{3} , {θ}_{4} , {θ}_{5} ∈ \left\{0, 1\right\} , ∀ \left(i, j\right) ∈ {A}_{3} ;$

For a candidate line with *lᵢⱼ*=1: ${ϕ}_{ij} = {δ}_{1} f \left(2, {d}_{ij}\right) + {δ}_{2} f \left(3, {d}_{ij}\right) + {δ}_{3} f \left(4, {d}_{ij}\right) + {δ}_{4} f \left(5, {d}_{ij}\right)$ ${z}_{ij} > 40 {δ}_{2} + 56 {δ}_{3} + 94 {δ}_{4}$ ${z}_{ij} \leq 40 {δ}_{1} + 56 {δ}_{2} + 94 {δ}_{3} + 123 {δ}_{4}$ ${δ}_{1} , {δ}_{2} , {δ}_{3} , {δ}_{4} ∈ \left\{0, 1\right\} , ∀ \left(i, j\right) ∈ {A}_{3} ;$

In the above formulas, *θ₁*, *θ₂, θ₃, θ₄,* and *θ₅* are respectively weight coefficients corresponding to full-truck-load costs for five vehicle types located on a branch line. *δ*₁, *δ*₂, *δ₃,* and *δ₄* are respectively weight coefficients corresponding to full-truck-load costs for four vehicle types located on a trunk line. The above coefficients may be set according to experience, or may be obtained by training by using a machine learning model, which is not limited in the present example embodiment.

By replacing the constraint (12) in the model with the above two formulas, the above model can be converted into a mixed integer linear programming model.

Finally, for the above mixed integer linear programming model, a solver (for example, a pyscipopt solver) of mixed integer linear programming may be used for solving. Although the mixed integer linear programming problem is an NP (Nondeterministic Polynomial) problem, the network scale will not be too large after the constructed routing sub-network is optimized for business requirements. When there are 447 stowage to be optimized, the required time for optimization is about 6 minutes, and the time consumption for optimization is less.

For example, for the business requirement, stowage optimization is performed on the final cargo; that is, the volume of the final cargo is reduced or the final cargo is not delivered any more through stowage adjustment. For this business requirement, the model of the example embodiment is used to optimize the 447 stowage. Firstly, business analysis is performed; since the final cargo is usually delivered in the form of less-truck-load transportation or full-truck-load transportation, the optimized line is positioned on a line with both full-truck-load transportation and less-truck-load transportation, or may a line where a plurality of vehicles is used.

In order to better understand this scene, the reason why the scene can reduce the transportation cost is supplemented as follows. 1). For the condition that there is less-truck-load cargo volume on the original line, the cost for the less-truck-load cargo volume is calculated according to the volume; the larger the volume is, the higher the cost is. If some or all of the less-truck-load cargo volumes are distributed to the alternative routing, for the alternative routing, the cost of the alternative routing is not increased since there is a remaining stowage capacity; however, for the original line, the reduction of the less-truck-load cargo volume can result in corresponding reduction of the cost of the original line, so that the scene may reduce the transportation cost.

2). For the condition that there is a plurality of full-truck-load vehicles on an original line, the cost for the full-truck-load transportation is calculated according to the vehicle type, the distance, or the like. Under the same distance, the greater the vehicle type is, the higher the cost is. If the cargo volume on the original line is distributed to the alternative routing, the cost of alternative routing will not be increased either; but for the original line, the used vehicle type may be lowered due to the reduction of the cargo volume, for example, may be lowered to 9.6 meters from original 14.5 meters. Therefore, for this scene, if the used vehicle type can be lowered due to stowage adjustment, the transportation cost can be reduced too.

The input parameters for the above mixed integer linear programming model include the line data of the line to be optimized, the stowage data of the stowage to be optimized, the associated routing of the stowage to be optimized, or the like; The output of the model is the value of the decision variable. That is, the output result mainly includes: (a) a stowage adjustment scheme including: outputting a departure sorting center where original stowage is located and original routing corresponding to the first line code as well as target routing; and (b) line details after stowage adjustment including: outputting data such as the cargo volume inflow, the cargo volume outflow, the remaining cargo volume and the remaining stowage capacity on the related lines. According to the present example embodiment, the optimization results for 447 stowage are finally obtained as follows: the cost is saved by 3327 RMB, the number of optimized stowage is 30, and the total optimized stowage volume is 109 cubic meters.

According to the present disclosure, on one hand, a routing sub-network to be optimized is constructed based on business requirements. Firstly, the line data of the line to be optimized and the stowage data of the stowage to be optimized as well as the associated routing of the stowage to be optimized are obtained; an associated line set corresponding to the stowage to be optimized is determined according to the associated routing of the stowage to be optimized; and, a routing sub-network to be optimized is constructed according to the line data of the line to be optimized and the stowage data of the stowage to be optimized as well as the associated line set. The above process has universality for customized business requirements, and provides technical guidance for constructing a routing sub-network. On the other hand, a mixed integer linear programming model (i.e., a routing network optimization model) for stowage optimization based on routing input is constructed. The routing which does not affect the timeliness is used as a model input, which provides a guarantee for not reducing the timeliness after stowage adjustment. Meanwhile, the comprehensive impact on the cargo volume on the line after stowage load adjustment is comprehensively considered in the mixed integer linear programming model, so that the stowage optimization has a global optimization effect.

Furthermore, according to the present example embodiment, there is further provided an apparatus 800 for determining a logistics routing network. The apparatus 800 for determining a logistics routing network may be applied to a server or a terminal device. Referring to FIG. 8, the apparatus 800 for determining a logistics routing network may include a data obtaining module 810, an associated line determination module 820, a line sub-network generation module 830, a routing sub-network construction module 840, and a routing network optimization module 850, where:

The data obtaining module 810 may be configured to obtain line data of a line to be optimized, stowage data of stowage to be optimized, and associated routing of the stowage to be optimized. The associated line determination module 820 may be configured to determine an associated line set corresponding to the stowage to be optimized according to the associated routing of the stowage to be optimized. The line sub-network generation module 830 may be configured to generate a line sub-network to be optimized according to the associated line set. The routing sub-network construction module 840 may be configured to obtain a routing sub-network to be optimized by adding corresponding line data and stowage data to the line sub-network to be optimized based on the line data of the line to be optimized and the stowage data of the stowage to be optimized. The routing network determination module 850 may be configured to screen out target routing in the routing sub-network to be optimized according to a transportation cost, and further determine a target logistics routing network.

In an example embodiment of the present disclosure, the routing network determination module 850 includes a calculation module and a target routing determination module. The calculation module may be configured to calculate a transportation cost of any routing in the routing sub-network to be optimized. The target routing determination module may be configured to select routing corresponding to a minimum transportation cost as the target routing.

In an example embodiment of the present disclosure, the calculation module includes a transportation cost type determination module and a cost determination module. The transportation cost type determination module may be configured to determine a transportation cost type of any routing in the routing sub-network to be optimized. The cost determination module may be configured to obtain the transportation cost of the routing by summing transportation costs corresponding to all transportation cost types according to the transportation cost type.

The specific details of each module or unit in the apparatus for determining a logistics routing network have been described in detail in the corresponding method for determining a logistics routing network. Therefore, details are not described here again.

In another aspect, there is further provided a non-transitory computer-readable medium according to the present disclosure. The computer-readable medium may be included in the electronic device described in the above embodiments, or may exist alone and is not assembled into the electronic device. The computer-readable medium carries one or more programs, and when the one or more programs are executed by an electronic device, the electronic device is enabled to implement the method as described in the above embodiments. For example, the electronic device may implement various steps as shown in FIG. 2 to FIG. 7.

It should be noted that the computer-readable medium shown in the present disclosure may be a computer-readable signal medium or a computer-readable storage medium, or any combination of the above. The computer-readable storage medium may be, for example, but is not limited to, an electrical, magnetic, optical, electromagnetic, infrared, or semiconductor system, apparatus, or device, or any combination of the above. More specific examples of the computer-readable storage medium may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that includes or stores a program that may be used by or in connection with an instruction execution system, apparatus, or device. In the present disclosure, the computer-readable signal medium may include a data signal propagated in a baseband or as part of a carrier, where a computer-readable program code is carried. Such a propagated data signal may take a variety of forms, including, but not limited to, an electromagnetic signal, an optical signal, or any suitable combination of the above. The computer-readable signal medium may also be any computer-readable medium other than a computer-readable storage medium, and the computer-readable medium may send, propagate, or transmit a program for use by or in connection with an instruction execution system, apparatus, or device. The program code contained on the computer-readable medium may be transmitted by any suitable medium, including but not limited to wireless, wire, optical cable, RF, etc., or any suitable combination of the above.

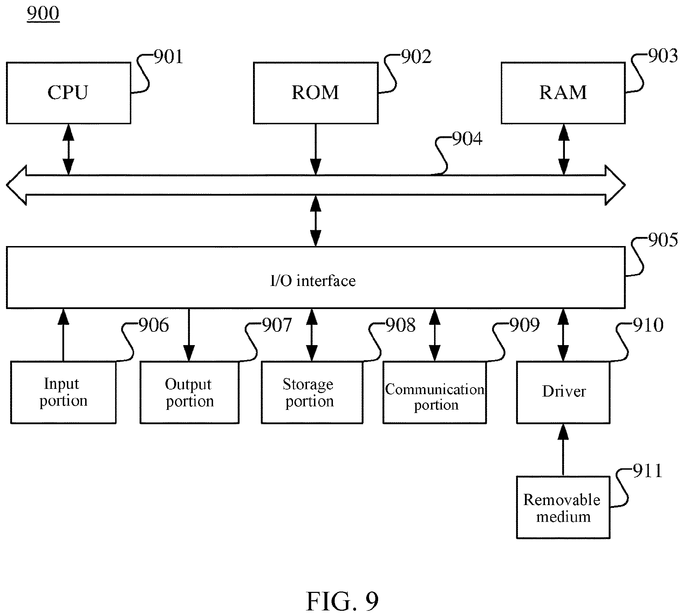

FIG. 9 illustrates a schematic structural diagram of a computer system suitable for implementing an electronic device according to embodiments of the present disclosure.

It should be noted that the computer system 900 of the electronic device shown in FIG. 9 is merely an example, and should not bring any limitation to the functions and use ranges of the embodiments of the present disclosure.

As shown in FIG. 9, the computer system 900 includes a central processing unit (CPU) 901 that may perform various appropriate actions and processing according to a program stored in a read-only memory (ROM) 902 or a program loaded from a storage portion 908 into a random access memory (RAM) 903. In RAM 903, various programs and data required for system operation are also stored. The CPU 901, the ROM 902, and the RAM 903 are connected to each other through a bus 904. Input/output (I/O) interface 905 is also connected to bus 904.

The following components are connected to the I/O interface 905: an input portion 906 including a keyboard, a mouse, etc.; an output portion 907 including a cathode ray tube (CRT), a liquid crystal display (LCD), or the like, and a speaker; a storage portion 908 including a hard disk; and a communication portion 909 including a network interface card, such as a LAN card, a modem, or the like. The communication portion 909 performs communication processing via a network such as the Internet. The driver 910 is also connected to the I/O interface 905 as needed. The removable medium 911, such as a magnetic disk, an optical disk, a magneto-optical disk, a semiconductor memory, or the like, is installed on the driver 910 as needed, so that the computer program read from the removable medium 911is installed into the storage portion 908 as needed.

In particular, according to embodiments of the present disclosure, the processes described below with reference to the flowcharts may be implemented as computer software programs. For example, embodiments of the present disclosure include a computer program product. The computer program product includes a computer program carried on a computer readable medium. The computer program includes program code for performing the method shown in the flowchart. In such embodiments, the computer program may be downloaded from the network via the communication portion 909 and installed, and/or may be installed from the removable medium 911. When the computer program is executed by the central processing unit (CPU) 901, various functions defined in the methods and apparatuses of the present disclosure are performed.

The flowcharts and block diagrams in the drawings illustrate the system architectures, functions, and operations of possible implementations of systems, methods, and computer program products according to various embodiments of the present disclosure. In this regard, each block in the flowcharts or block diagrams may represent a part of a module, program segment, or code. The part of a module, program segment, or code includes one or more executable instructions for implementing the specified logical functions. It should also be noted that, in some alternative implementations, the functions noted in the blocks may occur in a different order from that noted in the drawing. For example, two blocks represented in succession may, in fact, be executed substantially in parallel, which may sometimes be executed in a reverse order, depending upon the functions involved. It should also be noted that each block in the block diagrams or flowcharts, and combinations of blocks in the block diagrams or flowcharts, may be implemented with dedicated hardware-based systems that perform the specified functions or operations, or may be implemented with combinations of dedicated hardware and computer instructions.

It should be noted that although the various steps of the method in the present disclosure are described in a specific order in the drawings, this does not require or imply that these steps must be performed in this particular order, or that all the illustrated steps must be performed to achieve the desired results. Additionally or alternatively, some steps may be omitted, a plurality of steps may be combined into one step to be executed, and/or one step may be decomposed into a plurality of steps to be executed, etc., all of which should be regarded as a part of the present disclosure.

It should be understood that the present disclosure disclosed and defined in the present specification extends to all alternative combinations of two or more separate features mentioned or apparent in the context and/or drawings. All of these different combinations constitute more than one alternative aspect of the present disclosure. Embodiments of the present specification illustrate the best manner known to implement the present disclosure, and will enable those skilled in the art to utilize the present disclosure.

## Claims

1. A computer implemented method for determining a logistics routing network, comprising:
obtaining (S210) line data of a line to be optimized, stowage data of stowage to be optimized, and associated routing of the stowage to be optimized;
determining (S220) an associated line set corresponding to the stowage to be optimized according to the associated routing of the stowage to be optimized;
generating(S230) a line sub-network to be optimized according to the associated line set;
obtaining (S240) a routing sub-network to be optimized by adding corresponding line data and stowage data to the line sub-network to be optimized based on the line data of the line to be optimized and the stowage data of the stowage to be optimized; and
screening out (S250) target routing in the routing sub-network to be optimized according to a transportation cost, and further determining a target logistics routing network.

2. The method for determining a logistics routing network according to claim 1, wherein the method further comprises:
determining the line to be optimized; and
determining the stowage to be optimized according to the line to be optimized and a matching relationship between a line and stowage.

3. The method for determining a logistics routing network according to claim 1, wherein obtaining (S210) the line data of the line to be optimized, the stowage data of the stowage to be optimized, and the associated routing of the stowage to be optimized comprises:
obtaining (S310) mileage information, transportation capacity manner information, cargo volume information, remaining stowage capacity information and transportation cost information of the line to be optimized;
obtaining (S320) stowage volume information and stowage schedule information of different sorting centers corresponding to the stowage to be optimized;
obtaining (S330) alternative routing of the stowage to be optimized according to original routing of the stowage to be optimized; and
obtaining (S340) the associated routing according to the original routing and the alternative routing.

4. The method for determining a logistics routing network according to claim 3, wherein obtaining (S330) the alternative routing of the stowage to be optimized according to the original routing of the stowage to be optimized comprises:
obtaining the alternative routing of the stowage to be optimized by screening according to the original routing of the stowage to be optimized, thus service timeliness that stowage of the alternative routing arrives at a station is not lower than corresponding service timeliness of the original routing.

5. The method for determining a logistics routing network according to claim 1, wherein determining (S220) the associated line set corresponding to the stowage to be optimized according to the associated routing of the stowage to be optimized comprises:
determining (S610) a corresponding original line set according to the original routing of the stowage to be optimized;
determining (S620) a corresponding alternative line set according to the alternative routing of the stowage to be optimized; and
determining (S630) the associated line set according to the original line set and the alternative line set.

6. The method for determining a logistics routing network according to claim 1, wherein screening out (S250) the target routing in the routing sub-network to be optimized according to the transportation cost comprises:
calculating a transportation cost of a routing in the routing sub-network to be optimized; and
selecting (S730) routing corresponding to a minimum transportation cost as the target routing.

7. The method for determining a logistics routing network according to claim 6, wherein calculating the transportation cost of the routing in the routing sub-network to be optimized comprises:
determining (S710) a transportation cost type of the routing in the routing sub-networks to be optimized; and
obtaining (S720) the transportation cost of the routing by summing transportation costs corresponding to all transportation cost types according to the transportation cost type;
wherein the transportation cost type comprises a less-truck-load cost of a less-truck-load line on the original routing in the routing, a full-truck-load cost of a full-truck-load line on the original routing in the routing and an increased less-truck-load cost of an alternative line after stowage adjustment in the routing.

8. An apparatus (800) for determining a logistics routing network, comprising:
a data obtaining module (810), configured to obtain line data of a line to be optimized, stowage data of stowage to be optimized, and associated routing of the stowage to be optimized;
an associated line determination module (820), configured to determine an associated line set corresponding to the stowage to be optimized according to the associated routing of the stowage to be optimized;
a line sub-network generation module (830), configured to generate a line sub-network to be optimized according to the associated line set;
a routing sub-network construction module (840), configured to obtain a routing sub-network to be optimized by adding corresponding line data and stowage data to the line sub-network to be optimized based on the line data of the line to be optimized and the stowage data of the stowage to be optimized; and
a routing network determination module (850), configured to screen out target routing in the routing sub-network to be optimized according to a transportation cost, and further determine a target logistics routing network.

9. The apparatus (800) for determining a logistics routing network according to claim 8, wherein the data obtaining module (810) is further configured to:
obtain mileage information, transportation capacity manner information, cargo volume information, remaining stowage capacity information and transportation cost information of the line to be optimized;
obtain stowage volume information and stowage schedule information of different sorting centers corresponding to the stowage to be optimized;
obtain alternative routing of the stowage to be optimized according to original routing of the stowage to be optimized; and
obtain the associated routing according to the original routing and the alternative routing.

10. The apparatus (800) for determining a logistics routing network according to claim 8, wherein the associated line determination module (820) is further configured to:
determine a corresponding original line set according to the original routing of the stowage to be optimized;
determine a corresponding alternative line set according to the alternative routing of the stowage to be optimized; and
determine the associated line set according to the original line set and the alternative line set.

11. The apparatus (800) for determining a logistics routing network according to claim 8, wherein the routing network determination module (850) comprises:
a calculation module, configured to calculate a transportation cost of a routing in the routing sub-network to be optimized; and
a target routing determination module, configured to select routing corresponding to a minimum transportation cost as the target routing.

12. The apparatus (800) for determining a logistics routing network according to claim 11, wherein the calculation module comprises:
a transportation cost type determination module, configured to determine a transportation cost type of the routing in the routing sub-networks to be optimized; and
a cost determination module, configured to obtain the transportation cost of the routing by summing transportation costs corresponding to all transportation cost types according to the transportation cost type;
wherein the transportation cost type comprises a less-truck-load cost of a less-truck-load line on the original routing in the routing, a full-truck-load cost of a full-truck-load line on the original routing in the routing and an increased less-truck-load cost of an alternative line after stowage adjustment in the routing.

13. A non-transitory computer-readable medium, with a computer program stored thereon, wherein, when the program is executed by a processor, a method for determining a logistics routing network is implemented, and the method comprises:
obtaining (S210) line data of a line to be optimized, stowage data of stowage to be optimized, and associated routing of the stowage to be optimized;
determining (S220) an associated line set corresponding to the stowage to be optimized according to the associated routing of the stowage to be optimized;
generating(S230) a line sub-network to be optimized according to the associated line set;
obtaining (S240) a routing sub-network to be optimized by adding corresponding line data and stowage data to the line sub-network to be optimized based on the line data of the line to be optimized and the stowage data of the stowage to be optimized; and
screening out (S250) target routing in the routing sub-network to be optimized according to a transportation cost, and further determining a target logistics routing network.

14. The non-transitory computer-readable medium according to claim 13, wherein obtaining (S210) the line data of the line to be optimized, the stowage data of the stowage to be optimized, and the associated routing of the stowage to be optimized comprises:
obtaining (S310) mileage information, transportation capacity manner information, cargo volume information, remaining stowage capacity information and transportation cost information of the line to be optimized;
obtaining (S320) stowage volume information and stowage schedule information of different sorting centers corresponding to the stowage to be optimized;
obtaining (S330) alternative routing of the stowage to be optimized according to original routing of the stowage to be optimized; and
obtaining (S340) the associated routing according to the original routing and the alternative routing.

15. The non-transitory computer-readable medium according to claim 13, wherein determining (S220) the associated line set corresponding to the stowage to be optimized according to the associated routing of the stowage to be optimized comprises:
determining (S610) a corresponding original line set according to the original routing of the stowage to be optimized;
determining (S620) a corresponding alternative line set according to the alternative routing of the stowage to be optimized; and
determining (S630) the associated line set according to the original line set and the alternative line set.

## Patentansprüche

1. Computerimplementiertes Verfahren zum Bestimmen eines Logistik-Routing-Netzwerks, aufweisend:
Erhalten (S210) von Liniendaten einer zu optimierenden Linie,
Staugutdaten eines zu optimierenden Stauguts und einem zugehörigen Routing des zu optimierenden Stauguts;
Bestimmen (S220) eines zugehörigen Liniensatzes, der dem zu optimierenden Staugut entspricht, gemäß dem zugehörigen Routing des zu optimierenden Stauguts;
Erzeugen (S230) eines zu optimierenden Linienteilnetzwerks gemäß dem zugehörigen Liniensatz;
Erhalten (S240) eines zu optimierenden Routing-Teilnetzwerks durch Hinzufügen entsprechender Liniendaten und Staugutdaten zu dem zu optimierenden Linienteilnetzwerk basierend auf den Liniendaten der zu optimierenden Linie und den Staugutdaten des zu optimierenden Stauguts; und
Herausfiltern (S250) eines Ziel-Routings in dem zu optimierenden Routing-Teilnetzwerk gemäß Transportkosten, und ferner Bestimmen eines Ziellogistik-Routing-Netzwerks.

2. Verfahren zum Bestimmen eines Logistik-Routing-Netzwerks nach Anspruch 1, wobei das Verfahren ferner aufweist:
Bestimmen der zu optimierenden Linie; und
Bestimmen des zu optimierenden Stauguts gemäß der zu optimierenden Linie und einer Zuordnungsbeziehung zwischen einer Linie und einem Staugut.

3. Verfahren zum Bestimmen eines Logistik-Routing-Netzwerks nach Anspruch 1, wobei das Erhalten (S210) der Liniendaten der zu optimierenden Linie, der Staugutdaten des zu optimierenden Stauguts und des zugehörigen Routings des zu optimierenden Stauguts aufweist:
Erhalten (S310) von Streckenlängeninformationen,
Transportkapazitätsartinformationen, Frachtvolumeninformationen, Reststaukapazitätsinformationen und Transportkosteninformationen der zu optimierenden Linie;
Erhalten (S320) von Staugutvolumeninformationen und
Staugutplaninformationen verschiedener Sortierzentren, die dem zu optimierenden Staugut entsprechen;
Erhalten (S330) eines alternativen Routings des zu optimierenden Stauguts gemäß dem ursprünglichen Routing des zu optimierenden Stauguts; und
Erhalten (S340) des zugehörigen Routings gemäß dem ursprünglichen Routing und dem alternativen Routing.

4. Verfahren zum Bestimmen eines Logistik-Routing-Netzwerks nach Anspruch 3, wobei das Erhalten (S330) des alternativen Routings des zu optimierenden Stauguts gemäß dem ursprünglichen Routing des zu optimierenden Stauguts aufweist:
Erhalten des alternativen Routings des zu optimierenden Stauguts durch Filtern gemäß dem ursprünglichen Routing des zu optimierenden Stauguts, derart, dass eine Dienstleistungspünktlichkeit, mit der das Staugut des alternativen Routings an einer Station ankommt, nicht geringer ist als die entsprechende Dienstleistungspünktlichkeit des ursprünglichen Routings.

5. Verfahren zum Bestimmen eines Logistik-Routing-Netzwerks nach Anspruch 1, wobei das Bestimmen (S220) des zugehörigen Liniensatzes, der dem zu optimierenden Staugut entspricht, gemäß dem zugehörigen Routing des zu optimierenden Stauguts aufweist:
Bestimmen (S610) eines entsprechenden ursprünglichen Liniensatzes gemäß dem ursprünglichen Routing des zu optimierenden Stauguts;
Bestimmen (S620) eines entsprechenden alternativen Liniensatzes gemäß dem alternativen Routing des zu optimierenden Stauguts; und
Bestimmen (S630) des zugehörigen Liniensatzes gemäß dem ursprünglichen Liniensatz und dem alternativen Liniensatz.

6. Verfahren zum Bestimmen eines Logistik-Routing-Netzwerks nach Anspruch 1, wobei das Herausfiltern (S250) des Ziel-Routings in dem zu optimierenden Routing-Teilnetzwerk gemäß den Transportkosten aufweist:
Berechnen von Transportkosten eines Routings in dem zu optimierenden Routing-Teilnetzwerk; und
Auswählen (S730) eines Routings, das minimalen Transportkosten entspricht, als das Ziel-Routing.

7. Verfahren zum Bestimmen eines Logistik-Routing-Netzwerks nach Anspruch 6, wobei das Berechnen der Transportkosten des Routings in dem zu optimierenden Routing-Teilnetzwerk aufweist:
Bestimmen (S710) eines Transportkostentyps des Routings in den zu optimierenden Routing-Teilnetzwerken; und
Erhalten (S720) der Transportkosten des Routings durch Summieren von Transportkosten, die allen Transportkostentypen entsprechen, gemäß dem Transportkostentyp;
wobei der Transportkostentyp Teilladungskosten einer Teilladungslinie auf dem ursprünglichen Routing in dem Routing, Komplettladungskosten einer Komplettladungslinie auf dem ursprünglichen Routing in dem Routing und
erhöhte Teilladungskosten einer alternativen Linie nach einer Staugutanpassung in dem Routing aufweist.

8. Einrichtung (800) zum Bestimmen eines Logistik-Routing-Netzwerks, aufweisend:
ein Datenerlangungsmodul (810), das konfiguriert ist, um Liniendaten einer zu optimierenden Linie, Staugutdaten eines zu optimierenden Stauguts und
ein zugehöriges Routing des zu optimierenden Stauguts zu erhalten;
ein Bestimmungsmodul (820) für zugehörige Linien, das konfiguriert ist, um einen zugehörigen Liniensatz, der dem zu optimierenden Staugut entspricht, gemäß dem zugehörigen Routing des zu optimierenden Stauguts zu bestimmen;
ein Linienteilnetzwerkerzeugungsmodul (830), das konfiguriert ist, um ein zu optimierendes Linienteilnetzwerk gemäß dem zugehörigen Liniensatz zu erzeugen;
ein Routing-Teilnetzwerk-Konstruktionsmodul (840), das konfiguriert ist, um ein zu optimierendes Routing-Teilnetzwerk durch Hinzufügen entsprechender Liniendaten und Staugutdaten zu dem zu optimierenden Linienteilnetzwerk basierend auf den Liniendaten der zu optimierenden Linie und den Staugutdaten des zu optimierenden Stauguts zu erhalten; und
ein Routing-Netzwerk-Bestimmungsmodul (850), das konfiguriert ist, um ein Ziel-Routing in dem zu optimierenden Routing-Teilnetzwerk gemäß Transportkosten herauszufiltern und ferner ein Ziellogistik-Routing-Netzwerk zu bestimmen.

9. Einrichtung (800) zum Bestimmen eines Logistik-Routing-Netzwerks nach Anspruch 8, wobei das Datenerlangungsmodul (810) ferner konfiguriert ist zum:
Erhalten von Streckenlängeninformationen,
Transportkapazitätsartinformationen, Frachtvolumeninformationen,
Reststaukapazitätsinformationen und Transportkosteninformationen der zu optimierenden Linie;
Erhalten von Staugutvolumeninformationen und Staugutplaninformationen verschiedener Sortierzentren, die dem zu optimierenden Staugut entsprechen;
Erhalten eines alternativen Routings des zu optimierenden Stauguts gemäß dem ursprünglichen Routing des zu optimierenden Stauguts; und
Erhalten des zugehörigen Routings gemäß dem ursprünglichen Routing und dem alternativen Routing.

10. Einrichtung (800) zum Bestimmen eines Logistik-Routing-Netzwerks nach Anspruch 8, wobei das Bestimmungsmodul (820) für zugehörige Linien ferner konfiguriert ist zum:
Bestimmen eines entsprechenden ursprünglichen Liniensatzes gemäß dem ursprünglichen Routing des zu optimierenden Stauguts;
Bestimmen eines entsprechenden alternativen Liniensatzes gemäß dem alternativen Routing des zu optimierenden Stauguts; und
Bestimmen des zugehörigen Liniensatzes gemäß dem ursprünglichen Liniensatz und dem alternativen Liniensatz.

11. Einrichtung (800) zum Bestimmen eines Logistik-Routing-Netzwerks nach Anspruch 8, wobei das Routing-Netzwerkbestimmungsmodul (850) aufweist:
ein Berechnungsmodul, das konfiguriert ist, um Transportkosten eines Routings in dem zu optimierenden Routing-Teilnetzwerk zu berechnen; und ein Ziel-Routing-Bestimmungsmodul, das konfiguriert ist, um ein Routing,
das minimalen Transportkosten entspricht, als das Ziel-Routing auszuwählen.

12. Einrichtung (800) zum Bestimmen eines Logistik-Routing-Netzwerks nach Anspruch 11, wobei das Berechnungsmodul aufweist:
ein Transportkostentypbestimmungsmodul, das konfiguriert ist, um einen Transportkostentyp des Routings in den zu optimierenden Routing-Teilnetzwerken zu bestimmen; und
ein Kostenbestimmungsmodul, das konfiguriert ist, um die Transportkosten des Routings durch Summieren von Transportkosten, die allen Transportkostentypen entsprechen, gemäß dem Transportkostentyp zu erhalten;
wobei der Transportkostentyp Teilladungskosten einer Teilladungslinie auf dem ursprünglichen Routing in dem Routing, Komplettladungskosten einer Komplettladungslinie auf dem ursprünglichen Routing in dem Routing und
erhöhte Teilladungskosten einer alternativen Linie nach einer Staugutanpassung in dem Routing aufweist.

13. Nichtflüchtiges computerlesbares Medium mit einem darauf gespeicherten Computerprogramm, wobei, wenn das Programm durch einen Prozessor ausgeführt wird, ein Verfahren zum Bestimmen eines Logistik-Routing-Netzwerks implementiert wird, und das Verfahren aufweist:
Erhalten (S210) von Liniendaten einer zu optimierenden Linie,
Staugutdaten eines zu optimierenden Stauguts und einem zugehörigen Routing des zu optimierenden Stauguts;
Bestimmen (S220) eines zugehörigen Liniensatzes, der dem zu optimierenden Staugut entspricht, gemäß dem zugehörigen Routing des zu optimierenden Stauguts;
Erzeugen (S230) eines zu optimierenden Linienteilnetzwerks gemäß dem zugehörigen Liniensatz;
Erhalten (S240) eines zu optimierenden Routing-Teilnetzwerks durch Hinzufügen entsprechender Liniendaten und Staugutdaten zu dem zu optimierenden Linienteilnetzwerk basierend auf den Liniendaten der zu optimierenden Linie und den Staugutdaten des zu optimierenden Stauguts; und
Herausfiltern (S250) eines Ziel-Routings in dem zu optimierenden Routing-Teilnetzwerk gemäß Transportkosten, und ferner Bestimmen eines Ziellogistik-Routing-Netzwerks.

14. Nichtflüchtiges computerlesbares Medium nach Anspruch 13, wobei das Erhalten (S210) der Liniendaten der zu optimierenden Linie, der Staugutdaten des zu optimierenden Stauguts und des zugehörigen Routings des zu optimierenden Stauguts aufweist:
Erhalten (S310) von Streckenlängeninformationen,
Transportkapazitätsartinformationen, Frachtvolumeninformationen, Reststaukapazitätsinformationen und Transportkosteninformationen der zu optimierenden Linie;
Erhalten (S320) von Staugutvolumeninformationen und
Staugutplaninformationen verschiedener Sortierzentren, die dem zu optimierenden Staugut entsprechen;
Erhalten (S330) eines alternativen Routings des zu optimierenden Stauguts gemäß dem ursprünglichen Routing des zu optimierenden Stauguts; und
Erhalten (S340) des zugehörigen Routings gemäß dem ursprünglichen Routing und dem alternativen Routing.

15. Nichtflüchtiges computerlesbares Medium nach Anspruch 13, wobei das Bestimmen (S220) des zugehörigen Liniensatzes, der dem zu optimierenden Staugut entspricht, gemäß dem zugehörigen Routing des zu optimierenden Stauguts aufweist:
Bestimmen (S610) eines entsprechenden ursprünglichen Liniensatzes gemäß dem ursprünglichen Routing des zu optimierenden Stauguts;
Bestimmen (S620) eines entsprechenden alternativen Liniensatzes gemäß dem alternativen Routing des zu optimierenden Stauguts; und
Bestimmen (S630) des zugehörigen Liniensatzes gemäß dem ursprünglichen Liniensatz und dem alternativen Liniensatz.

## Revendications

1. Procédé mis en œuvre par ordinateur permettant de déterminer un réseau de routage logistique, comprenant :
l'obtention (S210) de données de ligne d'une ligne à optimiser, de données de chargement d'un chargement à optimiser, et d'un routage associé du chargement à optimiser ;
la détermination (S220) d'un ensemble de lignes associées correspondant au chargement à optimiser selon le routage associé du chargement à optimiser ;
la génération (S230) d'un sous-réseau de lignes à optimiser selon l'ensemble de lignes associées ;
l'obtention (S240) d'un sous-réseau de routage à optimiser par ajout de données de ligne correspondantes et de données de chargement au sous-réseau de lignes à optimiser sur la base des données de ligne de la ligne à optimiser et des données de chargement du chargement à optimiser ; et
le filtrage (S250) d'un routage cible dans le sous-réseau de routage à optimiser selon un coût de transport, et la détermination en outre d'un réseau de routage logistique cible.

2. Procédé permettant de déterminer un réseau de routage logistique selon la revendication 1, dans lequel le procédé comprend en outre :
la détermination de la ligne à optimiser ; et
la détermination du chargement à optimiser selon la ligne à optimiser et une relation d'appariement entre une ligne et un chargement.

3. Procédé permettant de déterminer un réseau de routage logistique selon la revendication 1, dans lequel l'obtention (S210) des données de ligne de la ligne à optimiser, des données de chargement du chargement à optimiser, et du routage associé du chargement à optimiser comprend :
l'obtention (S310) d'informations kilométriques, d'informations de mode de capacité de transport, d'informations de volume de fret, d'informations de capacité de chargement restante et d'informations de coût de transport de la ligne à optimiser ;
l'obtention (S320) d'informations de volume de chargement et
d'informations de planification de chargement de différents centres de tri correspondant au chargement à optimiser ;
l'obtention (S330) d'un routage alternatif du chargement à optimiser selon un routage d'origine du chargement à optimiser ; et
l'obtention (S340) du routage associé selon le routage d'origine et le routage alternatif.

4. Procédé permettant de déterminer un réseau de routage logistique selon la revendication 3, dans lequel l'obtention (S330) du routage alternatif du chargement à optimiser selon le routage d'origine du chargement à optimiser comprend :
l'obtention du routage alternatif du chargement à optimiser par filtrage selon le routage d'origine du chargement à optimiser, de sorte qu'une ponctualité de service selon laquelle le chargement du routage alternatif arrive au niveau d'une station ne soit pas inférieure à une ponctualité de service correspondante du routage d'origine.

5. Procédé permettant de déterminer un réseau de routage logistique selon la revendication 1, dans lequel la détermination (S220) de l'ensemble de lignes associées correspondant au chargement à optimiser selon le routage associé du chargement à optimiser comprend :
la détermination (S610) d'un ensemble de lignes d'origine correspondant selon le routage d'origine du chargement à optimiser ;
la détermination (S620) d'un ensemble de lignes alternatives correspondant selon le routage alternatif du chargement à optimiser ; et
la détermination (S630) de l'ensemble de lignes associées selon l'ensemble de lignes d'origine et l'ensemble de lignes alternatives.

6. Procédé permettant de déterminer un réseau de routage logistique selon la revendication 1, dans lequel le filtrage (S250) du routage cible dans le sous-réseau de routage à optimiser selon le coût de transport comprend :
le calcul d'un coût de transport d'un routage dans le sous-réseau de routage à optimiser ; et
la sélection (S730) d'un routage correspondant à un coût de transport minimal en tant que routage cible.

7. Procédé permettant de déterminer un réseau de routage logistique selon la revendication 6, dans lequel le calcul du coût de transport du routage dans le sous-réseau de routage à optimiser comprend :
la détermination (S710) d'un type de coût de transport du routage dans les sous-réseaux de routage à optimiser ; et
l'obtention (S720) du coût de transport du routage par addition de coûts de transport correspondant à tous les types de coûts de transport selon le type de coût de transport ;
dans lequel le type de coût de transport comprend un coût de chargement partiel d'une ligne en chargement partiel sur le routage d'origine dans le routage, un coût de chargement complet d'une ligne en chargement complet sur le routage d'origine dans le routage, et un coût de chargement partiel augmenté d'une ligne alternative après ajustement du chargement dans le routage.

8. Appareil (800) permettant de déterminer un réseau de routage logistique, comprenant :
un module d'obtention de données (810), configuré pour obtenir des données de ligne d'une ligne à optimiser, des données de chargement d'un chargement à optimiser, et un routage associé du chargement à optimiser ;
un module de détermination de lignes associées (820), configuré pour déterminer un ensemble de lignes associées correspondant au chargement à optimiser selon le routage associé du chargement à optimiser ;
un module de génération de sous-réseau de lignes (830), configuré pour générer un sous-réseau de lignes à optimiser selon l'ensemble de lignes associées ;
un module de construction de sous-réseau de routage (840), configuré pour obtenir un sous-réseau de routage à optimiser par ajout de données de ligne correspondantes et de données de chargement au sous-réseau de lignes à optimiser sur la base des données de ligne de la ligne à optimiser et des données de chargement du chargement à optimiser ; et
un module de détermination de réseau de routage (850), configuré pour filtrer un routage cible dans le sous-réseau de routage à optimiser selon un coût de transport, et déterminer en outre un réseau de routage logistique cible.

9. Appareil (800) permettant de déterminer un réseau de routage logistique selon la revendication 8, dans lequel le module d'obtention de données (810) est en outre configuré pour :
obtenir des informations kilométriques, des informations de mode de capacité de transport, des informations de volume de fret, des informations de capacité de chargement restante et des informations de coût de transport de la ligne à optimiser ;
obtenir des informations de volume de chargement et des informations de planification de chargement de différents centres de tri correspondant au chargement à optimiser ;
obtenir un routage alternatif du chargement à optimiser selon le routage d'origine du chargement à optimiser ; et
obtenir le routage associé selon le routage d'origine et le routage alternatif.

10. Appareil (800) permettant de déterminer un réseau de routage logistique selon la revendication 8, dans lequel le module de détermination de lignes associées (820) est en outre configuré pour :
déterminer un ensemble de lignes d'origine correspondant selon le routage d'origine du chargement à optimiser ;
déterminer un ensemble de lignes alternatives correspondant selon le routage alternatif du chargement à optimiser ; et
déterminer l'ensemble de lignes associées selon l'ensemble de lignes d'origine et l'ensemble de lignes alternatives.

11. Appareil (800) permettant de déterminer un réseau de routage logistique selon la revendication 8, dans lequel le module de détermination de réseau de routage (850) comprend :
un module de calcul, configuré pour calculer un coût de transport d'un routage dans le sous-réseau de routage à optimiser ; et
un module de détermination de routage cible, configuré pour sélectionner un routage correspondant à un coût de transport minimal en tant que routage cible.

12. Appareil (800) permettant de déterminer un réseau de routage logistique selon la revendication 11, dans lequel le module de calcul comprend :
un module de détermination de type de coût de transport, configuré pour déterminer un type de coût de transport du routage dans les sous-réseaux de routage à optimiser ; et
un module de détermination de coût, configuré pour obtenir le coût de transport du routage par addition de coûts de transport correspondant à tous les types de coûts de transport selon le type de coût de transport ;
dans lequel le type de coût de transport comprend un coût de chargement partiel d'une ligne en chargement partiel sur le routage d'origine dans le routage, un coût de chargement complet d'une ligne en chargement complet sur le routage d'origine dans le routage, et un coût de chargement partiel augmenté d'une ligne alternative après ajustement du chargement dans le routage.

13. Support non transitoire lisible par ordinateur, sur lequel est stocké un programme informatique, dans lequel, lorsque le programme est exécuté par un processeur, un procédé permettant de déterminer un réseau de routage logistique est mis en œuvre, et le procédé comprend :
l'obtention (S210) de données de ligne d'une ligne à optimiser, de données de chargement d'un chargement à optimiser, et d'un routage associé du chargement à optimiser ;
la détermination (S220) d'un ensemble de lignes associées correspondant au chargement à optimiser selon le routage associé du chargement à optimiser ;
la génération (S230) d'un sous-réseau de lignes à optimiser selon l'ensemble de lignes associées ;
l'obtention (S240) d'un sous-réseau de routage à optimiser par ajout de données de ligne correspondantes et de données de chargement au sous-réseau de lignes à optimiser sur la base des données de ligne de la ligne à optimiser et des données de chargement du chargement à optimiser ; et
le filtrage (S250) d'un routage cible dans le sous-réseau de routage à optimiser selon un coût de transport, et la détermination en outre d'un réseau de routage logistique cible.

14. Support non transitoire lisible par ordinateur selon la revendication 13, dans lequel l'obtention (S210) des données de ligne de la ligne à optimiser, des données de chargement du chargement à optimiser, et du routage associé du chargement à optimiser comprend :
l'obtention (S310) d'informations kilométriques, d'informations de mode de capacité de transport, d'informations de volume de fret, d'informations de capacité de chargement restante et d'informations de coût de transport de la ligne à optimiser ;
l'obtention (S320) d'informations de volume de chargement et
d'informations de planification de chargement de différents centres de tri correspondant au chargement à optimiser ;
l'obtention (S330) d'un routage alternatif du chargement à optimiser selon le routage d'origine du chargement à optimiser ; et
l'obtention (S340) du routage associé selon le routage d'origine et le routage alternatif.

15. Support non transitoire lisible par ordinateur selon la revendication 13, dans lequel la détermination (S220) de l'ensemble de lignes associées correspondant au chargement à optimiser selon le routage associé du chargement à optimiser comprend :
la détermination (S610) d'un ensemble de lignes d'origine correspondant selon le routage d'origine du chargement à optimiser ;
la détermination (S620) d'un ensemble de lignes alternatives correspondant selon le routage alternatif du chargement à optimiser ; et
la détermination (S630) de l'ensemble de lignes associées selon l'ensemble de lignes d'origine et l'ensemble de lignes alternatives.
